**Europäisches Patentamt**

**European Patent Office**

**Office européen des brevets**

(19)

(11) Veröffentlichungsnummer : **0 433 731 B1**

(12)

# EUROPÄISCHE PATENTSCHRIFT

(45) Veröffentlichungstag der Patentschrift :
**19.11.92 Patentblatt 92/47**

(51) Int. Cl.$^5$ : **F02N 15/08**, B62M 23/02

(21) Anmeldenummer : **90122901.3**

(22) Anmeldetag : **29.11.90**

(54) **Motorstarteinrichtung.**

(30) Priorität : **16.12.89 DE 3941579**

(43) Veröffentlichungstag der Anmeldung :
**26.06.91 Patentblatt 91/26**

(45) Bekanntmachung des Hinweises auf die
Patenterteilung :
**19.11.92 Patentblatt 92/47**

(84) Benannte Vertragsstaaten :
**DE ES FR GB IT NL**

(56) Entgegenhaltungen :
**DE-A- 3 530 194**
**DE-A- 3 618 629**
**FR-A- 2 557 847**
**GB-A- 2 057 578**
**GB-A- 2 073 683**

(73) Patentinhaber : **Fichtel & Sachs AG**
**Ernst-Sachs-Strasse 62**
**W-8720 Schweinfurt (DE)**

(72) Erfinder : **Knauer, Wolfgang**
**Junkersdorf Nr. 28 b**
**W-8729 Königsberg (DE)**

(74) Vertreter : **Liska, Horst, Dr.-Ing. et al**
**Patentanwälte H. Weickmann,K. Fincke,F.A.**
**Weickmann, B. Huber,H. Liska,J. Prechtel,B.**
**Böhm, Kopernikusstrasse 9 Postfach 86 0820**
**W-8000 München 86 (DE)**

EP 0 433 731 B1

**Beschreibung**

Die Erfindung betrifft eine Motorstarteinrichtung für ein sowohl über Pedale als auch mittels einer Brennkraftmaschine antreibbares Zweiradfahrzeug, insbesondere ein Fahrrad mit Hilfsmotor.

Aus dem US-Patent 4 418 784 ist ein Fahrrad mit Hilfsmotor bekannt, bei welchem der Motor oberhalb des Hinterrads des Fahrrads angebracht ist und das Hinterrad über ein Reibrad antreibt. Das Reibrad ist an einem Lenker gleichachsig zur Kurbelwelle des Motors schwenkbar gelagert und wird über ein Zahnradgetriebe von der Kurbelwelle aus angetrieben. Federn halten das Reibrad in Reibkontakt mit dem Reifen. Um das Reibrad vom Reifen abkuppeln zu können, ist am Lenker des Fahrrads ein Handhebel angebracht, der über ein Zugseil mit dem Schwenkarm des Reibrads verbunden ist und die Reibrolle gegen die Kraft der Federn vom Reifen abhebt. Der Hilfsmotor des bekannten Fahrrads wird über das Reibrad gestartet. Allerdings muß bei dieser Konstruktion der Hilfsmotor nahe dem Reifen, üblicherweise oberhalb des Reifens angeordnet werden, was den Schwerpunkt des Fahrrads in ungünstiger Weise nach oben verlagert und die Gefahr in sich birgt, daß die Bekleidung des Fahrers verschmutzt wird oder sich der Fahrer an dem heißen Motor verletzt. An dem bekannten Fahrrad kann kein Gepäckträger in üblicher Weise angebracht werden.

Es ist Aufgabe der Erfindung, eine Motorstarteinrichtung für ein sowohl über Pedale als auch mittels einer Brennkraftmaschine antreibbares Zweiradfahrzeug, insbesondere ein Fahrrad mit Hilfsmotor anzugeben, bei welchem die Brennkraftmaschine vom Reifen entfernt angeordnet werden kann und trotzdem das Starten der Brennkraftmaschine während der Fahrt erlaubt.

Die Erfindung geht von einer Motorstarteinrichtung gemäß der französischen Offenlegungsschrift FR-A- 2 557 847 aus, die ein am Fahrzeugrahmen schwenkbar gelagertes Schwenkelement, ein in Antriebsverbindung mit der Brennkraftmaschine stehendes, an dem Schwenkelement drehbar gelagertes Reibrad und eine über eine Zugverbindung das Schwenkelement zwischen einer Stellung, in der das Reibrad am Reifen eines der Fahrzeugräder anliegt und einer Stellung, in der das Reibrad vom Reifen abgehoben ist, bewegende Betätigungsvorrichtung umfaßt.

Die erfindungsgemäße Verbesserung besteht darin, daß die Brennkraftmaschine die Nabe des Fahrzeugrads antreibt und das Reibrad über eine biegsame Welle und eine an der Brennkraftmaschine vorgesehene, die Brennkraftmaschine lediglich beim Antrieb von dem Reibrad her mitnehmende Freilaufkupplung in Antriebsverbindung mit der Brennkraftmaschine steht.

Da die Brennkraftmaschine im Bereich der Nabe des Fahrzeugrads, insbesondere im Bereich der Nabe des Hinterrads, angeordnet ist, liegt der Schwerpunkt des Fahrrads vergleichsweise tief, und auch der üblicherweise für Gepäckträger und dergleichen vorgesehene Platz oberhalb des Rads bleibt frei. Trotz vergleichsweise großer Länge der Kraftübertragung erhöht die biegsame Welle das Fahrradgewicht nur unwesentlich. Die Flexibilität der biegsamen Welle gleicht auch die Schwenkbewegung des Schwenkelements aus. Da das Reibrad zum Anlassen der Brennkraftmaschine manuell gegen den Reifen gezogen wird, läßt sich Schlupf zwischen Reibrad und Reifen durch Erhöhen der Betätigungskraft unterbinden, was insbesondere bei regennassen Reifen von Vorteil ist. Die Freilaufkupplung sorgt dafür, daß bereits bei vergleichsweise geringer Fahrgeschwindigkeit und dementsprechend geringer Motordrehzahl angelassen werden kann. Die Freilaufkupplung sorgt dafür, daß der Motor unmittelbar nach dem Anspringen das Reibrad überholen kann.

In einer bevorzugten Ausgestaltung der Erfindung treibt die biegsame Welle die Freilaufkupplung über ein Winkelgetriebe, insbesondere ein Schneckengetriebe oder ein Kegelradgetriebe an. Das Winkelgetriebe erlaubt es nicht nur, die normalerweise in der Fahrradrahmenebene verlaufende Rotationsachse der biegsamen Welle in die normalerweise parallel zur Radnabenachse verlaufende Achsrichtung der Kurbelwelle des Motors umzulenken, sondern auch die Startdrehzahl des Motors an eine leicht zu erreichende, vergleichsweise niedrige Fahrgeschwindigkeit anzupassen.

Bei der Freilaufkupplung handelt es sich zweckmäßigerweise um eine Klinken-Freilaufkupplung, deren Klinken in eine Innenverzahnung eines Schwungrads der Brennkraftmaschine eingreifen. Auf diese Weise kann der für das Schwungrad ohnehin benötigte Platz mit ausgenutzt werden, ohne daß das Trägheitsmoment des Schwungrads nennenswert verringert werden müßte.

Klinken der vorstehenden Art werden üblicherweise von einer Feder radial nach außen in ihre Klinkenverzahnung vorgespannt. Es besteht aber auch die Möglichkeit, die Klinken nach radial innen federnd vorzuspannen und sie als Fliehgewichte auszubilden, so daß sie erst bei Überschreiten einer vorbestimmten Drehzahl ihres Klinkenträgers und damit bei Überschreiten einer vorbestimmten Fahrgeschwindigkeit in Eingriff mit der Innenverzahnung des Schwungrads kommen. Auf diese Weise wird die Freilaufkupplung erst dann geschlossen, wenn eine zum Anlassen der Brennkraftmaschine ausreichende Fahrgeschwindigkeit erreicht ist.

Insbesondere als Zweitaktmotor ausgebildete Brennkraftmaschinen haben üblicherweise ein Dekompressionsventil, über das die Verdichtung der Brennkraftmaschine zum Abstellen reduziert werden kann. In einer bevorzugten Ausgestaltung der Erfindung ist vorgesehen, daß die Betätigungsvorrichtung auch das Dekompressionsventil steuert und im Bereich der das Reibrad an den Reifen anlegenden Stellung des Schwenkelements das Dekompressionsventil öffnet. Auf diese Weise kann für den Startvorgang das Schwungrad, die Kurbelwelle und der Kolben der Brennkraftmaschine auf die Anlaßdrehzahl beschleunigt werden, ohne daß zugleich die Verdichtungsarbeit der Brennkraftmaschine mit aufgebracht werden müßte. Der Startvorgang wird hierdurch erleichtert. Es versteht sich, daß das Dekompressionsventil nur in einem Teil des Hubs, in welchem die Betätigungsvorrichtung das Reibrad in Antriebskontakt mit dem Reifen bringt, geöffnet ist, so daß das Dekompressionsventil beim Erreichen der Startdrehzahl geschlossen werden kann.

Eine gemeinsame Betätigung von Reibrad und Dekompressionsventil läßt sich auf einfache Weise dadurch erreichen, daß die Zugverbindung zwischen Schwenkelement und Betätigungsvorrichtung als Bowdenzug ausgebildet ist, der über eine Bowdenzuggabelung sowohl mit dem Schwenkelement als auch dem Dekompressionsventil gekuppelt ist. Da das Dekompressionsventil zur Verringerung der Verdichtung gedrückt werden muß, während das Schwenkelement gezogen werden soll, kann zur Konstruktionsvereinfachung vorgesehen sein, daß die Bowdenzuggabelung über eine Seilzugverbindung der einen Bowdenabzweigung mit dem Schwenkelement gekuppelt ist und über eine Manteldruckverbindung der anderen Bowdenabzweigung mit dem Dekompressionsventil gekuppelt ist. Die Bowdenzuggabelung setzt damit zugleich die Zugkraft der Betätigungsvorrichtung in die zum Öffnen des Dekompressionsventils erforderliche Druckkraft um.

Im folgenden werden Ausführungsbeispiele der Erfindung anhand einer Zeichnung näher erläutert. Hierbei zeigt:

Fig. 1 eine Seitenansicht eines Fahrrads mit Hilfsmotor;

Fig. 2 einen Detailschnitt durch den Motor, gesehen entlang einer Linie II-II in Fig. 1;

Fig. 3 einen Detailschnitt durch das Fahrrad gesehen entlang einer Linie III-III in Fig. 1 und

Fig. 4 eine bei dem Fahrrad der Fig. 1 einsetzbare Variante einer Startvorrichtung.

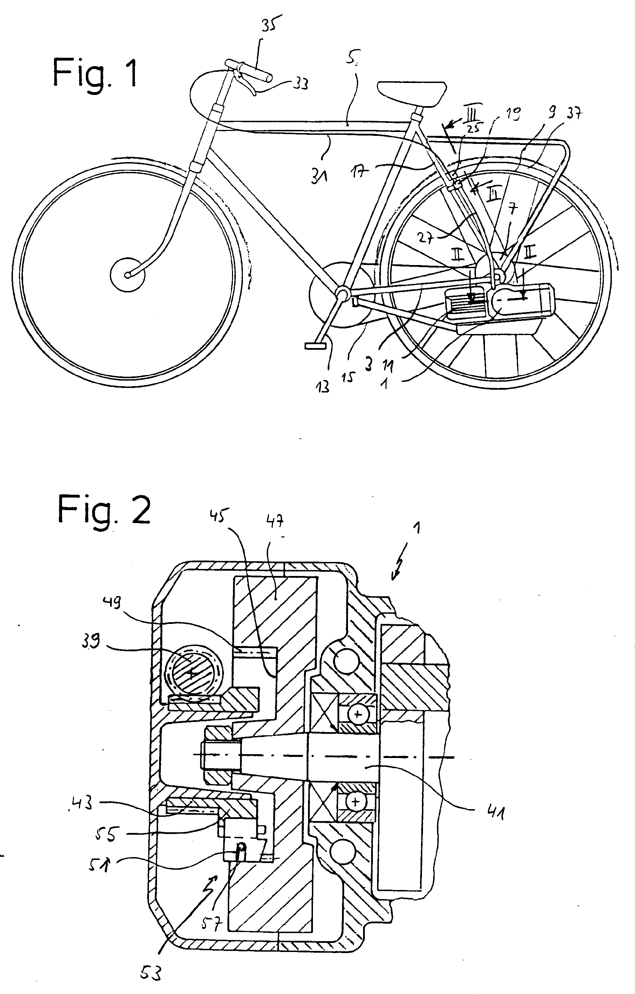

Das in Fig. 1 dargestellte Fahrrad hat einen Hilfsmotor 1, der an einer Hinterradgabel 3 eines allgemein mit 5 bezeichneten Fahrradrahmens befestigt ist und über ein nicht näher dargestelltes Getriebe eine Nabe 7 eines in der Hinterradgabel 3 gelagerten Hinterrads 9 antreibt. Bei dem Getriebe kann es sich um ein Schaltgetriebe handeln, und zweckmäßigerweise treibt der Hilfsmotor die Nabe 7 über eine Freilaufkupplung an, so daß das Hinterrad 9 die Antriebsverbindung gegebenenfalls überholen kann. Der Hilfsmotor 1 kann im übrigen herkömmlich konstruiert sein und hat im dargestellten Ausführungsbeispiel einen liegenden Zylinder 11. Das Fahrrad kann im übrigen herkömmlich über Pedale 13 angetrieben werden, die über eine Kettenverbindung 15 in Antriebsverbindung mit der Nabe 7 stehen.

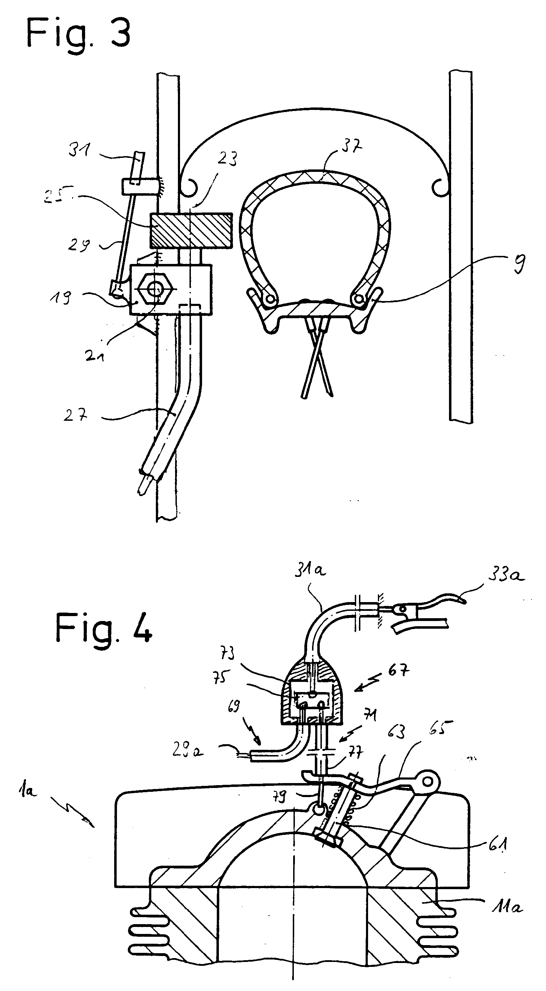

Zum Starten bzw. Anlassen des Hilfsmotors 1 ist an einer nach oben führenden Strebe 17 der Hinterradgabel 3 ein Schwenkelement 19 um eine etwa parallel zur Ebene des Rahmens 5 angenähert horizontal verlaufende Schwenkachse 21 (Fig. 3) schwenkbar gelagert. An dem Schwenkelement 19 ist um eine quer zur Schwenkachse 21 in Hochrichtung verlaufende Drehachse 23 drehbar ein Reibrad 25 gelagert, das über eine biegsame Welle 27 in einer nachfolgend noch näher erläuterten Antriebsverbindung zum Hilfsmotor 1 steht. An dem Schwenkelement 19 greift ein Zugseil 29 eines Bowdenzugs 31 an, der zu einem Handhebel 33 am Lenker 35 des Fahrrads führt. Zum Starten des Hilfsmotors 1 wird während der Fahrt der Handhebel 33 betätigt, wodurch das Reibrad 25 gegen den bei 37 dargestellten Reifen des Hinterrads gepreßt wird und der Hilfsmotor 1 angetrieben wird.

Fig. 2 zeigt Einzelheiten der Antriebsverbindung der biegsamen Welle 27 und des Hilfsmotors 1. Die biegsame Welle 27 treibt eine Schnecke 39, deren Achse etwa parallel zur Ebene des Fahrradrahmens 5 verläuft, an. Die Schnecke 39 kämmt mit einem gleichachsig zur Kurbelwelle 41 des Hilfsmotors angeordneten Schneckenrad 43, welches in eine Aussparung 45 eines Schwungrads 47 des Hilfsmotors 1 hineinreicht. Die Aussparung 45 ist mit einer Innenverzahnung 49 für den Eingriff von Klinken 51 eines allgemein mit 53 bezeichneten Klinkenfreilaufs versehen. Die Klinken 51 sitzen schwenkbar an einem Klinkenträger 55 des Schneckenrads 43 und werden von einer Feder 57 radial nach außen in Eingriff mit der Innenverzahnung 49 vorgespannt. Der Klinkenfreilauf 53 nimmt das Schwungrad 47 mit, wenn er vom Reibrad 25 her angetrieben wird, erlaubt aber, nach dem Start des Hilfsmotors 1, daß das Schwungrad 47 das Schneckenrad 43 überholt. Das Untersetzungsverhältnis des Schneckengetriebes ist so gewählt, daß die zum Starten des Hilfsmotors 1 benötigte Kurbelwellendrehzahl bereits bei komfortabel erreichbaren Fahrgeschwindigkeiten erreicht wird.

In Fig. 3 erstreckt sich die Schwenkachse 21 angenähert in Fahrtrichtung. Dies hat den Vorteil, daß das Zugseil 29 problemlos entlang von Rahmenstangen des Fahrradrahmens 5 geführt werden kann. Zweckmäßig ist aber auch eine in Hochrichtung verlaufende Orientierung der Schwenkachse, da sich hierbei ein Selbstverstärkungseffekt der Reibrollen-Anpreßkraft ergibt, wenn die Reibrolle 25 in Fahrtrichtung hinter der Strebe 17 angeordnet ist. Anstelle des Schneckengetriebes kann selbstverständlich auch ein anderes Winkelgetriebe vorgesehen werden, insbesondere ein Kegelradgetriebe.

Fig. 4 zeigt eine Variante der Starteinrichtung des anhand der Fig. 1 bis 3 erläuterten Fahrrads. Gleichwirkende Teile sind mit den Bezugszahlen der Fig. 1 bis 3 bezeichnet und zur Unterscheidung mit dem Buchstaben a versehen. Zur Erläuterung des Aufbaus und der Wirkungsweise wird auf die Beschreibung der Fig. 1 bis 3 Bezug genommen.

Der Zylinder 11a des Hilfsmotors 1a ist mit einem Dekompressionsventil 61 versehen, das von einer Feder 63 in seine geschlossene Stellung vorgespannt ist und durch Druck auf einen schwenkbar am Zylinder 11a angelenkten Ventilhebel 65 geöffnet werden kann. Das Dekompressionsventil 61 verringert in geöffnetem Zustand die Verdichtung in dem Zylinder 11a und wird normalerweise zum Abstellen des Hilfsmotors 1a ausgenutzt, insbesondere dann, wenn es sich bei dem Hilfsmotor 1a um einen Zweitaktmotor handelt.

Um die rotierenden Teile des Hilfsmotors 1a, d.h. insbesondere dessen Schwungrad, dessen Kurbelwelle, dessen Kolben und das zur Nabe des Hinterrads führende Getriebe beschleunigen zu können, ohne daß zusätzlich die Verdichtungsarbeit des Hilfsmotors 1a aufgebracht werden müßte, enthält der von dem Handhebel 33a zum Schwenkelement des Reibrads führende Bowdenzug 31a eine Bowdenzuggabelung 67, von der eine erste Abzweigung 69 zum Reibrad führt und eine zweite Abzweigung 71 mit dem Ventilhebel 65 gekuppelt ist. Die Bowdenzuggabelung 67 umfaßt ein Gehäuse 73, an welchem die Bowdenmäntel sowohl des Bowdenzugs 31a als auch der Abzweigungen 69 und 71 abgestützt sind, sowie ein in dem Gehäuse 73 verschiebbares Verteilerstück 75, das die Zugseile des Bowdenzugs 31a und der Abzweigungen 69, 71 zugfest miteinander verbindet. Während das Zugseil 29a der Abzweigung 69 entsprechend Fig. 3 zum Schwenkelement des Reibrads führt und der Mantel der Abzweigung 69 am Fahrradrahmen abgestützt ist, ist die Abzweigung 71 mit ihrem Mantel 77 am Ventilhebel 65 abgestützt und mit ihrem Zugseil 79 am Zylinder 11a fixiert.

Wird der Handhebel 33a betätigt, so wird über das Verteilerstück 75 auf das Zugseil 29a eine das Reibrad gegen den Reifen des Hinterrads drückende Zugkraft ausgeübt. Da andererseits das Zugseil 79 der Abzweigung 71 fixiert ist, übt die Reaktionskraft des Gehäuses 73 über den Bowdenmantel 77 eine Reaktions-Druckkraft auf den Ventilhebel 65 aus, die das Dekompressionsventil 61 öffnet. Durch geeignet eingestelltes Spiel des Bowdenzugs 31a und der Abzweigungen 69, 71, welches insbesondere auch durch die Krümmung, mit der die Abzweigung 71 sich zwischen der Bowdenzuggabelung 67 und dem Dekompressionsventil 61 erstreckt, bestimmt ist, wird erreicht, daß das Dekompressionsventil 61 nur in einem Teilbereich des für den Reibschluß des Reibrads vorgesehenen Betätigungswegs geöffnet ist bzw. sich nur dann öffnet, wenn die Betätigungskraft über eine gewisse Betätigungskraftschwelle hinaus ansteigt. Es hat sich gezeigt, daß durch Öffnen des Dekompressionsventils 61 kurz vor dem Starten des Hilfsmotors 1a der Hilfsmotor 1a problemlos auf eine so hohe Drehzahl gebracht werden kann, daß er bereits durch sein Schwungmoment beim Loslassen des Handhebels 33a gestartet werden kann, selbst wenn zum Startzeitpunkt das Reibrad vom Reifen wieder abgehoben sein sollte. Durch diese Maßnahme kann der bei einem schlüpfenden Reibrad eventuell verursachte Reifenverschleiß stark vermindert werden.

**Patentansprüche**

1. Motorstarteinrichtung für ein sowohl über Pedale als auch mittels einer Brennkraftmaschine antreibbares Zweiradfahrzeug, insbesondere ein Fahrrad mit Hilfsmotor, umfassend

   ein am Fahrzeugrahmen (5) schwenkbar gelagertes Schwenkelement (19),
   ein in Antriebsverbindung mit der Brennkraftmaschine (1) stehendes, an dem Schwenkelement (19) drehbar gelagertes Reibrad (25)
   und eine über eine Zugverbindung (31) das Schwenkelement (19) zwischen einer Stellung, in der das Reibrad (25) am Reifen (37) eines (9) der Fahrzeugräder, insbesondere des Hinterrads, anliegt und einer Stellung, in der das Reibrad (25) vom Reifen (37) abgehoben ist, bewegende, insbesondere als Betätigungshebel am Lenker des Fahrzeugs ausgebildete Betätigungsvorrichtung (33),
   **dadurch gekennzeichnet**, daß die Brennkraftmaschine (1) die Nabe (7) des Fahrzeugrads (9) antreibt und das Reibrad (25) über eine biegsame Welle (27) und eine an der Brennkraftmaschine (1) vorgesehene, die Brennkraftmaschine (1) lediglich bei Antrieb von dem Reibrad (25) her mitnehmende Freilaufkupplung (53) in Antriebsverbindung steht.

2. Motorstarteinrichtung nach Anspruch 1, dadurch gekennzeichnet, daß die biegsame Welle (27) die Freilaufkupplung (53) über ein Winkelgetriebe, insbesondere ein Schneckengetriebe (39, 43) oder ein Kegelradgetriebe antreibt.

3. Motorstarteinrichtung nach Anspruch 1 oder 2, dadurch gekennzeichnet, daß die Freilaufkupplung als Klinken-Freilaufkupplung (53) ausgebildet ist, deren Klinken (51) in eine Innenverzahnung (49) eines Schwungrads (47) der Brennkraftmaschine (1) eingreifen.

4. Motorstarteinrichtung nach Anspruch 3, dadurch gekennzeichnet, daß die Klinken (51) als fliehkraftbetätigbare Klinken ausgebildet sind.

5. Motorstarteinrichtung nach einem der Ansprüche 1 bis 4, dadurch gekennzeichnet, daß die Brennkraftmaschine (1a) ein Dekompressionsventil (61) umfaßt und daß die Betätigungsvorrichtung (33) auch das Dekompressionsventil (61) steuert und im Bereich der das Reibrad (25) an den Reifen (37) anlegenden Stellung des Schwenkelements (19) das Dekompressionsventil (61) öffnet.

6. Motorstarteinrichtung nach Anspruch 5, dadurch gekennzeichnet, daß die Zugverbindung (31a, 69) zwischen Schwenkelement (19) und Betätigungsvorrichtung (33a) als Bowdenzug ausgebildet ist, der über eine Bowdenzuggabelung (67) sowohl mit dem Schwenkelement (19) als auch dem Dekompressionsventil (61) gekuppelt ist.

7. Motorstarteinrichtung nach Anspruch 6, dadurch gekennzeichnet, daß die Bowdenzuggabelung (67) über eine Seilzugverbindung (29a) der einen Bowdenabzweigung (69) mit dem Schwenkelement (19) gekuppelt ist und über eine Manteldruckverbindung (77) der anderen Bowdenabzweigung (71) mit dem Dekompressionsventil (61) gekuppelt ist.

**Claims**

1. An engine starting means for a two-wheeler vehicle, particularly a bicycle with an auxiliary engine, adapted to be driven both via pedals and also by an internal combustion engine, and comprising a pivoting element (19) pivotally mounted on the vehicle frame (5), a friction wheel (25) mounted to rotate on the pivoting element (19) and drivingly connected to the internal combustion engine (1) and an actuating device (33) constructed in particular as an actuating lever on the handlebars of the vehicle and adapted to move the pivoting element (19) via a traction connection (31) between a position in which the friction wheel (25) bears on the tyre (37) of one (9) of the vehicle wheels, particularly the rear wheel, and a position in which the friction wheel (25) is lifted off the tyre (37), characterised in that the internal combustion engine (1) drives the hub (7) of the vehicle wheel (9) and in that via a flexible shaft (27) and a free wheel coupling (53) provided on the internal engine (1) the friction wheel (25) is drivingly connected to the internal combustion engine (1) only when the drive is effected from the friction wheel (25).

2. An engine starting means according to Claim 1, characterised in that the flexible shaft (27) drives the free wheel coupling (53) via an angled drive, particularly a worm transmission (39, 43) of a bevel gear transmission.

3. An engine starting means according to Claim 1 or 2, characterised in that the free wheel coupling is constructed as a ratchet free wheel coupling (53), of which the ratchets (51) engage internally cut teeth (49) in a fly wheel (47) of the internal combustion engine (1).

4. An engine starting means according to Claim 3, characterised in that the ratchets (51) are constructed as centrifugal force actuated ratchets.

5. An engine starting means according to one of Claims 1 to 4, characterised in that the internal combustion engine (1a) comprises a decompression valve (61) and in that the actuating device (33) also controls the decompression valve (61) and opens the decompression valve (61) in the region of the position of the pivoting element (19) in which the friction wheel (25) is applied against the tyres (37).

6. An engine starting means according to Claim 5, characterised in that the traction connection (31a, 69) between the pivoting element (19) and the actuating device (33a) is constructed as a bowden control cable which is coupled by a bifurcated bowden cable link to both the pivoting element (19) and also the decompression valve (61).

7. An engine starting means according to Claim 6, characterised in that the bifurcated bowden control link (67) is coupled by a cable connection (29a) from one bowden control cable branch (69) to the pivoting element (19) and is coupled by a sheathed pressure connection (77) to the other branch (71) of the bowden control cable to the decompression valve (61).

**Revendications**

1. Démarreur de moteur pour un véhicule à deux roues pouvant être entraîné tant par des pédales qu'au moyen d'un moteur à combustion interne, en particulier une bicyclette à moteur auxiliaire, comportant
un élément pivotant (19), monté pivotant sur le cadre (5) du véhicule,
une roue de friction (25) en liaison d'entraînement avec le moteur à combustion interne (1), montée tournante sur l'élément pivotant (19)
et un dispositif d'actionnement (33), conçu comme un levier d'actionnement sur le guidon du véhicule, déplaçant, par l'intermédiaire d'un câble de liaison (31), l'élément pivotant (19), entre une position dans laquelle la roue de friction (25) s'applique contre le pneu (37) de l'une (9) des roues du véhicule, en particulier la roue arrière, et une position dans laquelle la roue de friction (25) est relevée du pneu (37), caractérisé en ce que le moteur à combustion interne (1) entraîne le moyeu (7) de la roue (9) du véhicule,et la roue de friction (25) est en liaison d'entraînement, par un arbre (27) flexible et un accouplement à roue libre (53), prévu sur le moteur (1), entraînant le moteur (1) uniquement en cas d'entraînement à partir de la roue de friction (25).

2. Démarreur de moteur selon la revendication 1, caractérisé en ce que l'arbre (27) flexible entraîne l'accouplement à roue libre (53) par un engrenage angulaire, en particulier un engrenage à vis sans fin (39, 43) ou un engrenage à roue conique.

3. Démarreur de moteur selon la revendication 1 ou 2, caractérisé en ce que l'accouplement à roue libre est un accouplement à roue libre à cliquets (53) dont les cliquets (51) s'engagent dans une denture intérieure (49) d'un volant (47) du moteur à combustion interne (1).

4. Démarreur de moteur selon la revendication 3, caractérisé en ce que les cliquets (51) sont actionnables par la force centrifuge.

5. Démarreur de moteur selon l'une des revendications 1 à 4, caractérisé en ce que le moteur à combustion interne (1a) comporte une soupape de décompression (61) et en ce que le dispositif d'actionnement (33) commande aussi la soupape de décompression (61) et ouvre la soupape de décompression (61) dans la zone de la position de l'élément pivotant (19), appliquant la roue de friction (25) contre le pneu (37).

6. Démarreur de moteur selon la revendication 5, caractérisé en ce que le câble de liaison (31a, 69) entre l'élément pivotant (19) et le dispositif d'actionnement (33a) est un câble Bowden qui est accouplé à l'élément pivotant (19) ainsi qu'à la soupape de décompression (61), par une fourche de câble Bowden (67).

7. Démarreur de moteur selon la revendication 6, caractérisé en ce que la fourche de câble Bowden (67) est accouplée à l'élément pivotant (19), par un câble de traction (29a) d'une branche (69) et est accouplée à la soupape de décompression (61), par une liaison de pression sur la gaine (77) de l'autre branche Bowden (71).

Fig. 1

Fig. 2

# Fig. 3

# Fig. 4